# FASCICULE DE BREVET EUROPEEN

(11) **EP 4 246 018 B1**
(45) Date de publication et mention de la délivrance du brevet: **18.12.2024**
(21) Numéro de dépôt: 23160827.4
(22) Date de dépôt: 08.03.2023
(51) Int. Cl.: F16H 57/04

(54) **DÉFLECTEUR D'HUILE DE LUBRIFICATION, RÉDUCTEUR DE VITESSE COMPORTANT UN TEL DÉFLECTEUR ET TURBOMACHINE COMPORTANT UN TEL RÉDUCTEUR DE VITESSE**
SCHMIERÖLDEFLEKTOR, UNTERSETZUNGSGETRIEBE MIT SOLCH EINEM DEFLEKTOR UND TURBOMASCHINE MIT SOLCH EINEM GESCHWINDIGKEITSMINDERER
LUBRICATING OIL DEFLECTOR, SPEED REDUCER COMPRISING SUCH A DEFLECTOR AND TURBOMACHINE COMPRISING SUCH A SPEED REDUCER

(30) Priorité: 16.03.2022 FR 2202313
(43) Date de publication de la demande: 20.09.2023
(73) Titulaire: Safran Transmission Systems, 92700 Colombes (FR)
(72) Inventeur: MARCOS IZQUIERDO, Juan-Luis, 77550 Moissy-Cramayel (FR)
(74) Mandataire: Cabinet Beau de Loménie

(56) Documents cités:
- EP-A1- 3 767 134
- WO-A1-2014/046926
- WO-A1-2019/141920
- FR-A1- 3 103 529

## Description

### Domaine Technique

Le présent exposé concerne un déflecteur d'huile de lubrification, un réducteur de vitesse comportant un tel déflecteur ainsi qu'un turboréacteur d'aéronef à soufflante comportant un tel un réducteur de vitesse.

### Technique antérieure

Les turbomachines d'aéronef à soufflante actuels à haut taux de dilution comportent un système de transmission mécanique, appelé réducteur, qui a pour fonction d'entraîner en rotation l'arbre de la soufflante (appelée en terminologie anglosaxonne « fan ») à partir de la rotation d'une turbine de puissance de la ligne basse pression du turboréacteur. Le réducteur permet ainsi de transformer la vitesse de rotation de l'arbre de la turbine de puissance en une vitesse de rotation réduite pour l'arbre entraînant la soufflante. De manière générale, le réducteur doit transmettre la puissance motrice vers la soufflante tout en assurant le rapport de vitesse demandé et ce, dans des contraintes d'encombrement et de masse très sévères. Plusieurs architectures et technologies sont possibles pour le réducteur et l'architecture retenue dépend en premier lieu du rapport de réduction des vitesses.

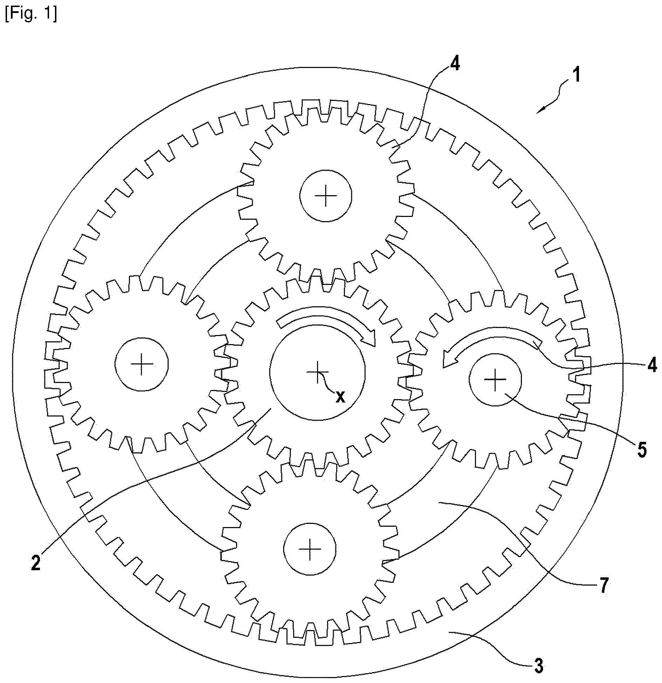

La figure 1 représente une vue en coupe transversale d'un réducteur de vitesse selon l'art antérieur. Cette figure illustre une architecture dans laquelle le réducteur de vitesse 1 comporte un pignon planétaire central 2 entraîné par un arbre d'entrée (non représenté) mobile en rotation autour d'un axe X (perpendiculaire au plan de la figure) ainsi qu'une couronne externe 3 coaxiale au pignon planétaire 2. Le réducteur 1 comporte, en outre, des pignons satellites 4 qui sont engrenés à la fois avec le pignon planétaire 2 et avec la couronne externe 3. Les pignons satellites 4 sont montés rotatifs sur des pivots 5 d'une pièce appelée porte-satellites 7 du réducteur 1.

Comme indiqué ci-dessus, deux configurations de réducteur sont envisageables :
- les réducteurs planétaires dans lesquels le porte-satellites 7 est fixe et la couronne 3 est libre en rotation ;
- les réducteurs épicycloidaux dans lesquels la couronne 3 est fixe et le porte-satellites 7 est libre en rotation.

De manière connue, les dentures du pignon planétaire 2, de la couronne 3 et des pignons satellites 4 sont lubrifiées par de l'huile de lubrification froide qui est acheminée par des canaux de distribution d'huile (non représentés) à partir d'un réservoir d'huile (non représenté).

Le fonctionnement des turboréacteurs à taux de dilution élevés nécessite un débit d'huile particulièrement important, pour assurer la lubrification et le refroidissement des pignons et des paliers et ainsi assurer le bon fonctionnement du réducteur et la sécurité du turboréacteur.

Cependant, la ventilation des pignons est à l'origine d'un échauffement de l'huile froide dû au phénomène de couple résistif appliqué au réducteur 1 par l'air. L'énergie générée par cet échauffement est alors dissipée par mise en mouvement de l'air, ce qui conduit à une augmentation de la température dans le réducteur pouvant nuire à la sûreté du réducteur et donc du turboréacteur.

Il a été constaté qu'une grande recirculation d'huile se produit autour de la gorge (non représentée) du pignon planétaire 2 et provoque des pertes par ventilation de l'huile dans le réducteur, ce qui dégrade notamment le rendement du réducteur. EP 3 767 134 A1 décrit un collecteur d'huile pour un réducteur mécanique de turbomachine d'aéronef. WO 2019/141920 A1 décrit un collecteur d'huile pour réducteur de vitesse notamment de turbomachine, réducteur de vitesse et turbomachine associés.

Il existe donc un besoin de réduire les pertes par ventilation et d'améliorer le rendement du réducteur.

### Exposé de l'invention

A cet effet, la présente invention concerne un déflecteur d'huile de lubrification selon la revendication 1.

La configuration du déflecteur permet ainsi, lorsque ce dernier est agencé de telle manière que la première extrémité soit à une cote située au-dessus de la cote de la deuxième extrémité, sous leffet de la gravité terrestre, de recueillir de l'huile de lubrification présente au niveau de la première extrémité et de la transférer à l'intérieur du corps, pour l'acheminer à distance de la première extrémité et l'évacuer, au niveau de la deuxième extrémité distante, dans une direction opposée à la première extrémité.

Lorsque le déflecteur est placé dans un réducteur de vitesse de telle manière que la première extrémité est disposée en vis-à-vis du pignon solaire du réducteur, l'huile présente au niveau de la première extrémité est récupérée au moins en partie par cette dernière et transférée jusqu'à la deuxième extrémité où elle est évacuée, ce qui permet de limiter la re-circulation d'huile autour du pignon solaire et donc de réduire les pertes par ventilation.

Selon d'autres caractéristiques possibles :
- la première extrémité comporte une cuvette de réception d'huile de lubrification destinée à recevoir de l'huile ;
- ledit au moins un canal interne de guidage s'étendant suivant une direction longitudinale d'extension, la cuvette de réception d'huile de lubrification est positionnée à la première extrémité du corps de manière décalée suivant une direction transversale relativement à la direction longitudinale d'extension ;
- ledit au moins un canal interne de guidage s'étendant suivant une direction longitudinale d'extension, la première extrémité du corps est pourvue, de manière décalée suivant une direction transversale relativement à la direction longitudinale d'extension, d'orifices de sortie d'huile de lubrification;

- le corps a une forme générale allongée qui s'étend de la première extrémité à la deuxième extrémité ;
- la forme générale allongée du corps est cintrée dans une partie qui est disposée entre la première extrémité et la deuxième extrémité et à distance de celles-ci
- le corps comporte en outre un conduit interne agencé transversalement par rapport à la forme générale allongée du corps.

Selon un autre objet, la présente invention concerne un réducteur de vitesse d'une turbomachine, caractérisé en ce qu'il comprend au moins un déflecteur d'huile de lubrification tel que brièvement exposé ci-dessus.

Ce réducteur de vitesse comporte les mêmes caractéristiques et avantages que le déflecteur précité.

Selon d'autres caractéristiques possibles :
- le réducteur comprend une architecture du type comprenant un pignon solaire et des pignons satellites qui sont disposés autour du pignon solaire et qui sont en prise, d'une part, avec le pignon solaire et, d'autre part, avec une couronne qui s'étend autour des pignons satellites ;
- les pignons satellites sont agencés suivant une disposition verticale autour du pignon solaire, un ou plusieurs déflecteurs d'huile de lubrification tels que brièvement exposés ci-dessus s'étendant chacun entre le pignon solaire et deux pignons satellites adjacents de telle manière que la première extrémité du ou des déflecteurs soit orientée en vis-à-vis du pignon solaire et soit située à une position verticale supérieure à celle de la deuxième extrémité opposée du déflecteur concerné qui est située à distance du pignon solaire, entre les deux pignons satellites adjacents correspondants ;
- le réducteur comporte un déflecteur d'huile de lubrification qui s'étend verticalement entre le pignon solaire et deux pignons satellites adjacents;
- le réducteur comporte un au moins un déflecteur d'huile de lubrification qui s'étend de manière oblique entre le pignon solaire et deux pignons satellites adjacents.

Selon encore un autre objet, la présente invention concerne une turbomachine comprenant un réducteur de vitesse de turbomachine tel que brièvement exposé ci-dessus.

### Brève description des dessins

L'objet du présent exposé et ses avantages seront mieux compris à la lecture de la description détaillée faite ci-après de différents exemples de réalisation donnés à titre d'exemples non limitatifs. Cette description fait référence aux pages de figures annexées, sur lesquelles :
[Fig. 1] La figure 1 représente une vue schématique en coupe transversale d'un réducteur de vitesse selon l'art antérieur;
[Fig. 2] La figure 2 représente une vue schématique simplifiée et partielle d'un réducteur de vitesse d'un turboréacteur d'aéronef à soufflante selon un exemple de réalisation de l'invention;
[Fig. 3] La figure 3 représente une vue schématique agrandie du réducteur de vitesse de la figure 2 montrant un déflecteur selon un exemple de réalisation de l'invention;
[Fig. 4] La figure 4 représente une vue schématique en section transversale du déflecteur de la figure 3;
[Fig. 5] La figure 5 représente une vue schématique en perspective du déflecteur de la figure 4 ;
[Fig. 6A] La figure 6A représente une variante possible de la configuration d'un déflecteur gravitaire selon l'invention ;
[Fig. 6B] La figure 6B représente une autre variante possible de la configuration d'un déflecteur gravitaire selon l'invention ;
[Fig. 7] La figure 7 représente une vue schématique simplifiée, analogue à celle de la figure 2 et agrandie, montrant l'implantation possible d'un déflecteur selon un exemple de réalisation de l'invention ;
[Fig. 8] La figure 8 représente suivant une vue en demi-coupe axiale un exemple de turbomachine intégrant l'invention ;
[Fig. 9] La figure 9 représente une architecture possible d'un réducteur de vitesse de la turbomachine de la figure 8 et susceptible d'incorporer l'invention.

### Description des modes de réalisation

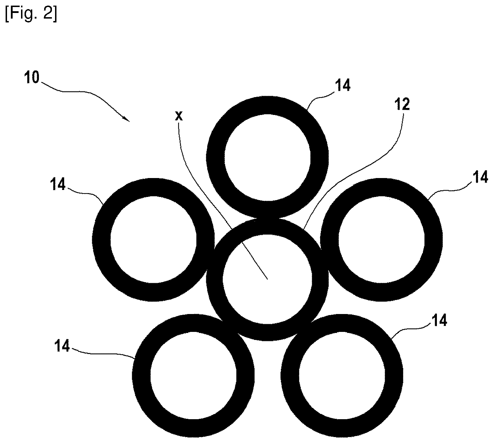

Comme représenté à la figure 2 et désigné par la référence générale notée 10, un réducteur de vitesse à architecture planétaire d'une turbomachine telle qu'un turboréacteur d'aéronef à soufflante à haut taux de dilution selon un exemple de réalisation de l'invention comporte un pignon solaire central 12 entraîné par un arbre d'entrée (non représenté) mobile en rotation autour d'un axe X (perpendiculaire au plan vertical de la figure) et des pignons satellites 14 qui sont agencés suivant une disposition verticale (le long de l'axe z) autour du pignon solaire 12. Les pignons satellites 14 sont en prise, c'est-à-dire engrenés, avec le pignon solaire 12.

Les pignons satellites 14 sont par ailleurs également en prise, c'est-à-dire engrenés, avec une couronne externe (non représentée mais analogue à la couronne 3 de la figure 1) coaxiale au pignon solaire 2. Ces pignons satellites 14 sont montés rotatifs sur des pivots d'une pièce porte-satellites non représentée du réducteur 10. La figure 1 illustre une configuration possible pour le réducteur de vitesse 10, excepté le nombre de pignons satellites qui est susceptible de varier.

Dans le réducteur de vitesse 10 le porte-satellites est fixe et la couronne externe est libre en rotation (réducteur planétaire).

Selon le rapport de réduction envisagé, le réducteur planétaire peut être configuré suivant un étage ou deux étages.

Dans l'exemple de réalisation décrit, bien que cela ne soit nullement limitatif, l'architecture planétaire a, par exemple, un rapport de réduction d'environ 2 à 6.

De manière connue, les dentures du pignon solaire 12, de la couronne externe et des pignons satellites 14 sont lubrifiées par de l'huile de lubrification froide qui est acheminée par des canaux de distribution d'huile (non représentés) à partir d'un réservoir d'huile (non représenté).

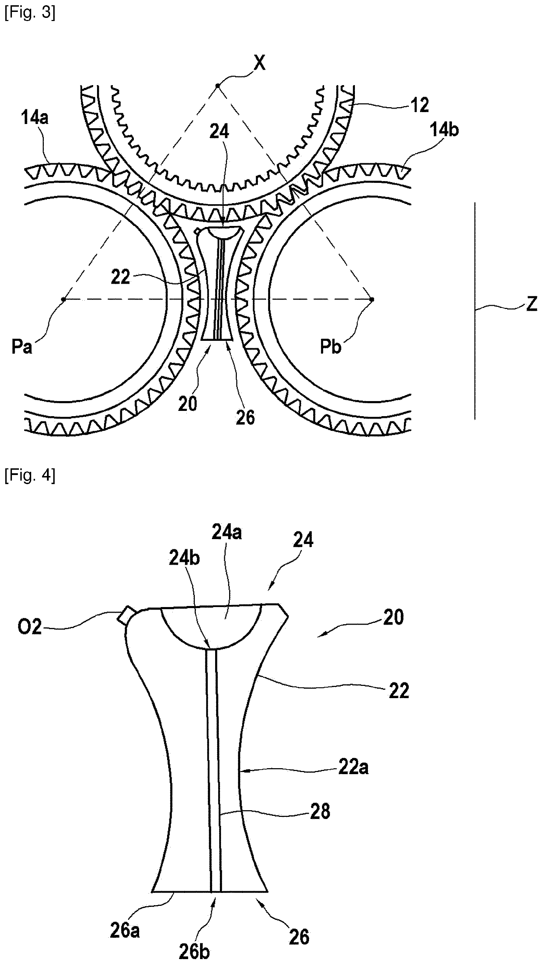

Dans l'exemple de réalisation illustré sur la figure 3, le réducteur 10 comporte un déflecteur d'huile de lubrification 20 (fixé au porte satellites) qui s'étend verticalement suivant l'axe Z dans un espace vertical inter-pignons situé entre le pignon solaire central 12 et les deux pignons satellites adjacents 14a, 14b situés en dessous du pignon solaire 12. Les deux pignons satellites adjacents 14a, 14b sont montés rotatifs sur des pivots d'axes respectifs Pa, Pb de la pièce porte-satellites non représentée et ces axes forment avec l'axe X de rotation du pignon central 12 un triangle (illustré en pointillés sur la fiure 3) dont la pointe est orientée vers le haut et dont la base reliant les axes Pa et Pb est horizontale. Le déflecteur gravitaire 20 est ainsi positionné en partie basse du réducteur 10 de manière à favoriser l'écoulement gravitaire.

Le déflecteur gravitaire 20 comprend de manière générale un corps 22 ayant une première et une deuxième extrémités opposées 24 et 26. Suivant l'implantation du déflecteur gravitaire 20 dans l'espace vertical inter-pignons défini plus haut, la première extrémité 24 du déflecteur gravitaire est orientée en vis-à-vis du pignon solaire 12 et est située à une position verticale (suivant l'axe Z) supérieure à celle de la deuxième extrémité opposée 26 du déflecteur qui est située à distance du pignon solaire (suivant l'axe Z), entre les deux pignons satellites adjacents correspondants 14a, 14b qui l'encadrent.

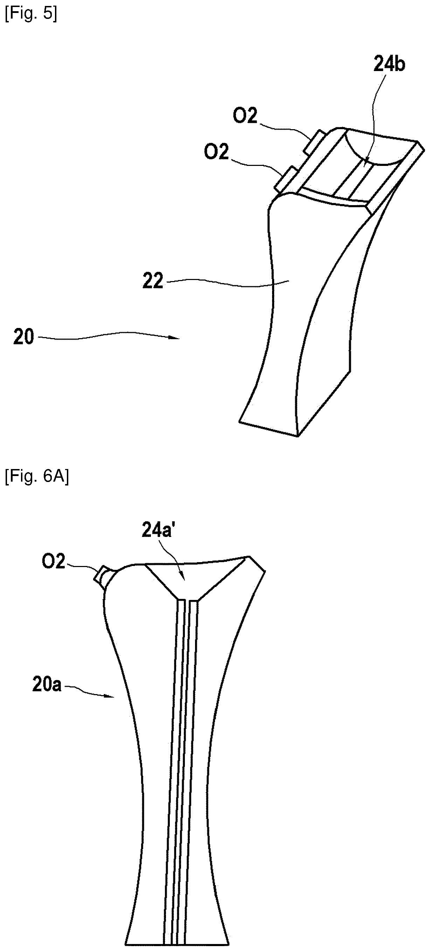

Les figures 4 et 5 représentent le déflecteur 20 sans le réducteur qui peut l'intégrer.

La première extrémité 24, orientée vers le haut, est configurée pour recevoir de l'huile de lubrification et comporte ici la forme d'une cuvette 24a de réception d'huile de lubrification qui recueille notamment l'huile présente dans la zone située entre le pignon solaire 12 et la première extrémité 24.

Le corps 22 comprend au moins un canal (ou conduit) interne 28 de guidage ou d'acheminement de l'huile recueillie par la cuvette 24a et qui s'étend, suivant une direction longitudinale d'extension (ici la direction est confondue avec la verticale), depuis la première extrémité 24, notamment de la cuvette 24a, jusqu'à la deuxième extrémité opposée 26. L'huile recueillie par la cuvette 24a s'écoule verticalement dans le canal interne 28 sous l'action de la gravité et atteint la deuxième extrémité opposée 26 par laquelle l'huile est évacuée/éjectée hors du corps par gravité.

Dans le présent exemple de réalisation, un seul canal interne 28 est présent dans le corps. Toutefois, selon d'autres exemples de réalisation non représentés, plusieurs canaux internes au corps peuvent être envisagés pour augmenter le débit d'huile à évacuer, en étant par exemple disposés parallèlement l'un à l'autre en arrière plan sur la figure 4 (ex : double canal). On notera que le canal interne 28 peut adopter différentes formes (notamment sa section de passage) et dimensions selon les applications envisagées. Le canal interne peut ainsi avoir une section de passage rectangulaire comme illustré sur la figure 5, une section de passage oblongue, circulaire...

La figure 5 montre en perspective un exemple possible de forme de cuvette 24a de réception d'huile de lubrification où la cuvette possède des parois incurvées (concaves) orientées vers le bas, formant sensiblement un V, qui débouchent en partie passe sur une fente allongée 24b (par exemple de forme sensiblement rectangulaire) formant une ouverture d'entrée du canal interne 28.

Comme représenté sur les figures 3 à 5, le corps 22 a une forme générale allongée qui s'étend de la première extrémité 24 à la deuxième extrémité 26 et qui est cintrée dans une partie disposée entre la première extrémité et la deuxième extrémité et à distance de celles-ci. La partie cintrée est ici la partie centrale 22a du corps suivant la vue en section transversale des figures 3 et 4.

Suivant cette configuration cintrée, les deux extrémités opposées 24 et 26 ont chacune une forme générale évasée en éloignement de la partie centrale 22a du corps. La forme générale en diabolo du corps est ainsi adaptée à la forme générale de l'espace vertical inter-pignons défini plus haut et illustré sur la figure 3.

La deuxième extrémité 26 du corps prend la forme d'une face sensiblement plane 26a qui est disposée horizontalement lorsque le déflecteur 20 est dans la position de la figure 3. Une ouverture de sortie 26b du canal interne 28a débouche au niveau de la face d'extrémité plane 26a pour évacuer l'huile qui s'écoule gravitairement dans le canal.

Dans l'exemple de réalisation illustré sur la figure 5 le corps présente une épaisseur (dimension perpendiculaire au plan de la figure 4) qui est ici constante et une forme générale rectangulaire suivant une vue prise dans la direction de la flèche latérale indiquée sur cette figure. Le canal interne 28 s'étend ici suivant une grande partie de l'épaisseur du corps.

Comme représenté sur les figures 3 à 5, la cuvette de réception d'huile de lubrification 24a est positionnée à la première extrémité du corps de manière décalée suivant une direction transversale relativement à la direction longitudinale d'extension du canal interne 28. Compte tenu de l'orientation verticale de la direction longitudinale d'extension, la cuvette 24a est ainsi décalée latéralement, c'est-à-dire horizontalement vers un des deux côtés latéraux opposés de la première extrémité 24. Le canal interne 28 est d'ailleurs lui aussi également décalé latéralement vers le coté correspondant du corps. Cette disposition décalée latéralement de la cuvette 24a peut permettre, par exemple, de favoriser la récupération d'huile provenant d'une zone qui est située entre le pignon solaire 12 et le pignon satellite 14b et vers laquelle la cuvette est décalée latéralement.

Par ailleurs, dans la configuration illustrée, la première extrémité 24 du corps est pourvue, de manière décalée transversalement relativement à la direction longitudinale d'extension du canal, d'orifices de sortie d'huile de lubrification 02 (gicleurs de lubrification des engrènements solaires-satellites). Sur la figure 5 deux orifices de sortie 02 sont représentés, alignés suivant l'épaisseur du corps 22 mais un nombre différent peut alternativement être envisagé (un conduit transversal non représenté permet d'acheminer de l'huile provenant de la cuvette 24a jusqu'aux points d'éjection 02). Ces orifices permettent de faciliter la lubrification externe des pignons satellites et peuvent également contribuer à la lubrification des paliers (sorties pour la lubrification de la denture).

Le déflecteur gravitaire 20 a principalement deux fonctions : il guide l'huile de lubrification entre le déflecteur et chacun des pignons satellites 14a, 14b et il guide l'huile par canalisation interne par effet gravitaire de la première extrémité 24 à la deuxième extrémité 26.

Plus particulièrement, le déflecteur gravitaire 20 vise à capter/accumuler, dans la cuvette 24a formant une poche de rétention, une partie de l'huile présente dans la gorge circonférentielle (non représentée) du pignon solaire 12. L'huile recueillie s'accumule dans cette cuvette où elle est freinée avant de s'écouler par l'ouverture 24b à travers le canal interne 28 sous l'effet de la gravité, accélérant ainsi l'écoulement d'huile. Le canal interne 28 débouche à distance du pignon solaire et l'huile est ainsi évacuée par gravité, en sortant par l'ouverture 26b, en direction de la couronne externe entourant l'agencement de la figure 2, comme la couronne 3 de la figure 1.

Autrement dit, le déflecteur gravitaire 20 joue le rôle d'un accumulateur à effet gravitaire qui assure le transfert interne d'une partie de l'huile présente dans la gorge circonférentielle du pignon solaire 12 pour l'évacuer hors de cette zone et vers la couronne externe.

Ceci a pour effet de diminuer la quantité d'huile recirculée autour du pignon solaire 12 et de diminuer les pertes par ventilation de l'huile, améliorant ainsi le rendement du réducteur.

On notera que le déflecteur gravitaire 20 peut être fabriqué de différents manières, par exemple par taille dans la masse d'un bloc, par fabrication additive, par fonderie ou autre.

D'autres configurations de déflecteur gravitaire sont bien entendu envisageables au sens de la présente invention afin d'assurer les fonctions mentionnées ci-dessus. La présence des orificesO2 (gicleurs de lubrification) n'est pas indispensable, de même que la position décalée de la cuvette 24a et du canal interne et la forme du corps peut varier dans les limites acceptables pour pouvoir être positionné dans l'espace inter-pignons. Sa dimension longitudinale peut notamment varier pour s'étendre jusqu'à une position plus proche de la couronne que ce qui est représenté sur la figure 3.

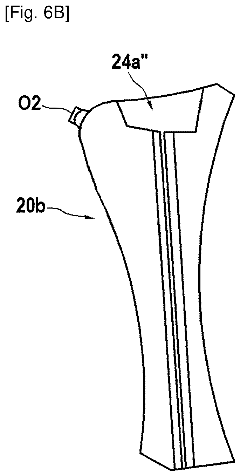

A titre d'exemples, les figures 6A et 6B illustrent deux configurations possibles de déflecteurs 20a et 20b suivant lesquelles, respectivement, la cuvette 24a' a, en coupe, une forme générale conique et la cuvette 24a" a, en coupe, une forme générale rectangulaire. Les autres caractéristiques du déflecteur peuvent être indentiques au déflecteur 20 décrit plus haut.

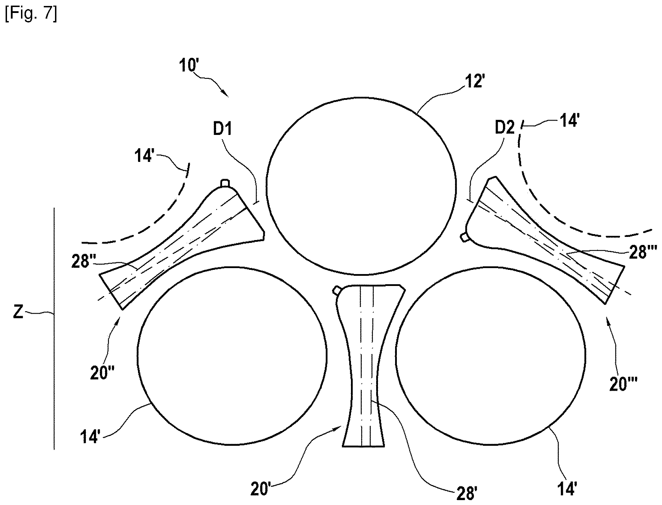

La figure 7 illustre un autre exemple de réalisation de réducteur de vitesse 10' dans lequel un ou plusieurs déflecteurs gravitaires 20', 20", 20'" peuvent être implantés dans un espace inter-pignons. Seuls deux pignons satellites adjacents 14' de la partie inférieure du réducteur et le pignon solaire 12' sont représentés en traits pleins (deux autres pignons satellites adjacents aux deux premiers sont partiellement représentés schématiquement en pointillés) mais la configuration est généralement la même que celle de la figure 2.

Ainsi, de manière générale, un déflecteur gravitaire 20", 20'" peut être positionné entre le pignon solaire 12' et deux pignons satellites adjacents 14' de telle manière que la première extrémité du déflecteur gravitaire soit orientée en vis-à-vis du pignon solaire 12' et soit située à une position verticale supérieure à celle de la deuxième extrémité opposée du déflecteur concerné. La deuxième extrémité opposée du déflecteur concerné est située à distance du pignon solaire 12', entre les deux pignons satellites correspondants 14'. Dans cet exemple de réalisation, un déflecteur gravitaire 20", 20'" s'étend ainsi de manière oblique, par rapport à la verticale Z, entre le pignon solaire 12' et les deux pignons satellites adjacents 14' en traits pleins. L'angle d'inclinaison entre le déflecteur gravitaire concerné et la verticale passant par le déflecteur gravitaire 20' dépend notamment du nombre des pignons satellites 14'. Plus ce nombre est élevé plus l'angle d'inclinaison est faible. La configuration des déflecteurs gravitaires latéraux 20", 20'" est généralement différente de celle du déflecteur gravitaire 20' bien que la forme générale externe puisse être identique. En particulier la pente du canal interne de guidage de l'écoulement d'huile 28" et 28'" pour les déflecteurs 20" et 20'" (pente d'évacuation) peut être modifiée par rapport à la configuration du canal interne 28 de la figure 4 (ce canal 28 est aligné avec la direction générale longitudinale du déflecteur 20), afin de favoriser l'écoulement d'huile vers le bas du réducteur.Ainsi chaque canal interne de guidage 28" et 28'" est incliné vers le bas par rapport à la direction générale longitudinale du déflecteur considéré, schématisée par la droite en pointillés D1, D2 sur la figure 7. De même, la cuvette de réception (non repésentée ici) peut également être modifiée par rapport à celle de la figure 4, par exemple, comme sur les figures 6A et 6B ou d'une autre manière.

A titre d'exemple, le réducteur 10' peut également comprendre le déflecteur 20' identique au déflecteur 20 des figures 2 à 5.

Selon une variante non représentée, le réducteur 10' peut comprendre le déflecteur 20' identique au déflecteur 20 des figures 2 à 5 et l'un des déflecteurs 20", 20'" ou l'ensemble des trois déflecteurs 20', 20" et 20'". Alternativement, le réducteur 10' peut comprendre seulement l'un ou l'autre des déflecteurs 20", 20"', sans le déflecteur 20'.

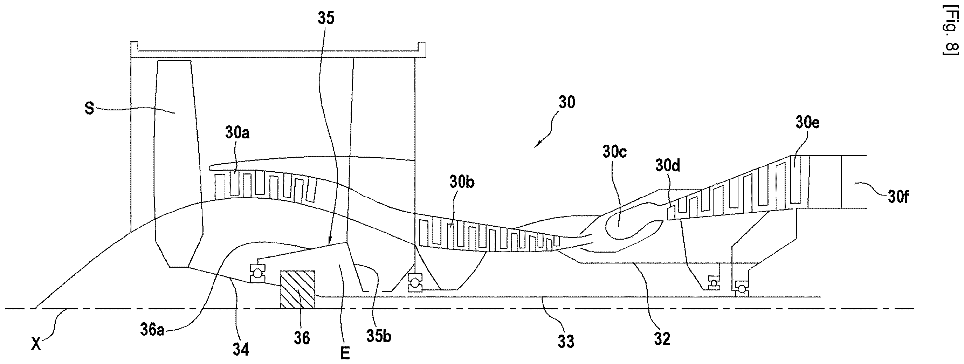

La figure 8 illustre un exemple possible de turbomachine (suivant une demi-coupe axiale par rapport à l'axe longitudinal X de la turbomachine) pouvant intégrer l'invention.La turbomachine 30 qui est ici un turboréacteur d'aéronef à soufflante comporte, de manière classique, une soufflante S, un compresseur basse pression 30a, un compresseur haute pression 30b, une chambre annulaire de combustion 30c, une turbine haute pression 30d, une turbine basse pression 30e et une tuyère d'échappement 30f. Le compresseur haute pression 30b et la turbine haute pression 30d sont reliés par un arbre haute pression 32 et forment avec lui un corps haute pression (HP). Le compresseur basse pression 30a et la turbine basse pression 30e sont reliés par un arbre basse pression 33 et forment avec lui un corps basse pression (BP).

La soufflante S est entraînée par un arbre de soufflante 34 qui est entrainé par l'arbre BP 33 au moyen d'un réducteur de vitesse 36. Ce réducteur est ici de type planétaire et est positionné dans la partie avant de la turbomachine. Une structure fixe comportant schématiquement, ici, une partie amont 35a et une partie aval 35b qui compose le carter moteur ou stator 35 est agencée de manière à former une enceinte E entourant le réducteur 36. Cette enceinte E est ici fermée en amont par des joints au niveau d'un palier permettant la traversée de l'arbre de soufflante 34 et en aval par des joints au niveau de la traversée de l'arbre BP 33.

D'autres configurations de turbomachines sont bien entendu envisageables pour mettre en oeuvre l'invention.

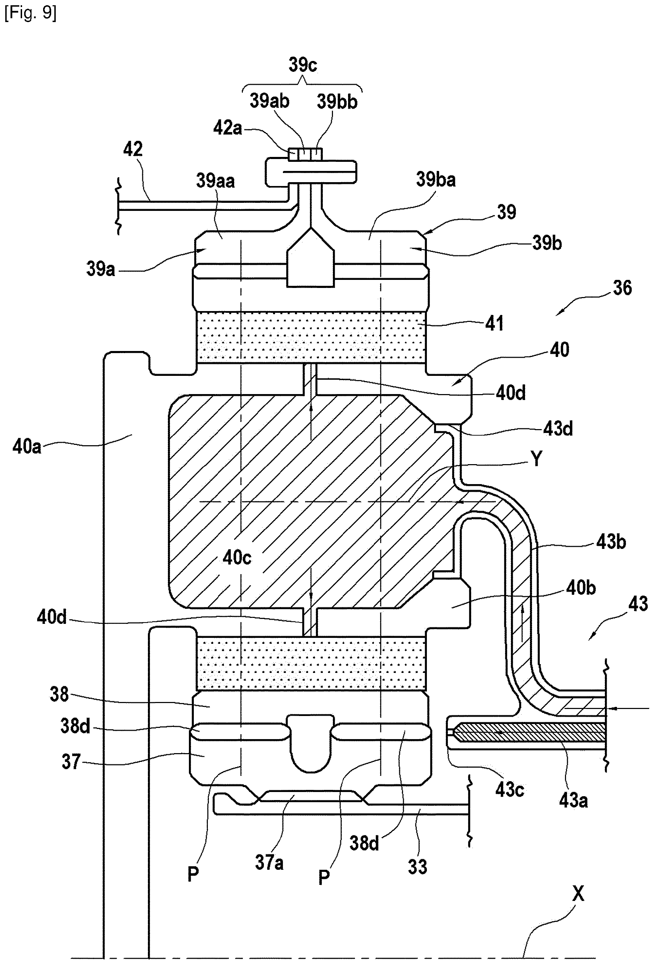

La figure 9 illustre un exemple possible de configuration (suivant une demi-coupe axiale) pour le réducteur 36 de la figure 8. En entrée, le réducteur 36 est relié à l'arbre BP 33, par exemple par l'intermédiaire de cannelures 37a. Ainsi l'arbre BP 33 entraîne un pignon solaire 37. Classiquement, le pignon solaire 37, dont l'axe de rotation est confondu avec celui de la turbomachine X, entraîne une série de pignons satellites 38, qui sont équirépartis sur le même diamètre autour de l'axe de rotation X. Ce diamètre est égal au double de l'entraxe de fonctionnement entre pignons solaire 37 et satellites 38. Le nombre de pignons satellites 38 est généralement défini entre trois et sept pour ce type d'application.

L'ensemble des pignons satellites 38 est maintenu, en sortie, par un châssis appelé porte-satellites 40. Chaque satellite 38 tourne autour de son propre axe Y, et engrène avec la couronne externe 39.

Dans cette configuration planétaire, le porte-satellites 40 est fixé au carter moteur ou stator 35 de la figure 8. Chaque satellite 38 entraine la couronne 39 qui est rapportée à l'arbre de soufflante 34 (fig. 8) via un porte-couronne 42.

Chaque satellite 38 est monté libre en rotation à l'aide d'un palier 41, par exemple de type roulement ou palier hydrostatique. Chaque palier 41 est monté sur un des axes 40b du porte-satellites 40 et tous les axes sont positionnés les uns par rapport aux autres à l'aide d'un ou plusieurs châssis structurels 40a du porte-satellites 40. Il existe un nombre d'axes et de paliers égal au nombre de satellites. Pour des raisons de fonctionnement, de montage, de fabrication, de contrôle, de réparation ou de rechange les axes et le châssis peuvent être séparés en plusieurs pièces.

La denture d'un réducteur peut, par exemple, être séparée en plusieurs hélices. Dans l'exemple illustré le fonctionnement d'un réducteur à plusieurs hélices avec une couronne séparée en deux demi-couronnes va être décrit ci-après.

Une demi-couronne avant 39a est constituée d'une jante 39aa et d'une demi-bride de fixation 39ab. Sur la jante 39aa se trouve l'hélice avant de la denture du réducteur. Cette hélice avant engrène avec celle du satellite 38 qui engrène avec celle du solaire 37.

Une demi-couronne arrière 39b constituée d'une jante 39ba et d'une demi-bride de fixation 39bb. Sur la jante 39ba se trouve l'hélice arrière de la denture du réducteur. Cette hélice arrière engrène avec celle du satellite 38 qui engrène avec celle du solaire 37.

La demi-bride de fixation 39ab de la couronne avant 39a et la demi-bride de fixation 39bb de la couronne arrière 39b forment la bride de fixation 39c de la couronne. La couronne 39 est fixée à un porte-couronne en assemblant la bride de fixation 39c de la couronne et la bride de fixation 42a du porte-couronne à l'aide d'un montage boulonné par exemple.

Les flèches de la figure 9 décrivent l'acheminement de l'huile dans le réducteur 36. L'huile arrive dans le réducteur 36 depuis la partie stator 35 (fig. 8) dans le distributeur 43 par différents moyens qui ne seront pas précisés dans cette vue car ils sont spécifiques à un ou plusieurs types d'architecture. Le distributeur est séparé en deux parties en général, chacune répétée du même nombre de satellites. Les injecteurs 43a ont pour fonction de lubrifier les dentures et les bras 43b ont pour fonction de lubrifier les paliers. L'huile est amenée vers l'injecteur 43a pour ressortir par l'extrémité 43c afin de lubrifier les dentures. L'huile est également amenée vers le bras 43b et circule via la bouche d'alimentation 43d du palier. L'huile circule ensuite à travers l'axe dans une ou des zones tampons 40c pour ensuite ressortir par les orifices 40d afin de lubrifier les paliers des satellites.

Bien que la présente invention ait été décrite en se référant à des modes de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Déflecteur (20 ; 20', 20", 20"') d'huile de lubrification pour un réducteur de vitesse de turbomachine, le déflecteur comprenant un corps (22) ayant une première extrémité (24) destinée à être disposée en regard d'un pignon solaire du réducteur et une deuxième extrémité opposée (26), le corps (22) comportant deux faces latérales destinées chacune à être disposées en regard d'un pignon satellite du réducteur et qui relient chacune la première et la deuxième extrémité (24, 26) entre elles, le corps (22) comportant au moins un canal interne (28) de guidage de l'huile, **caractérisé en ce que** la première extrémité (24) du corps (22) est configurée pour recevoir de l'huile du pignon solaire et la deuxième extrémité opposée (26) est configurée pour évacuer l'huile hors du corps (22), le canal interne (28) de guidage de l'huile débouchant à la première extrémité (24) et à la deuxième extrémité (26) et étant configuré pour évacuer l'huile par gravité à travers la deuxième extrémité (26).

2. Déflecteur d'huile de lubrification selon la revendication 1, **caractérisé en ce que** la première extrémité (24) comporte une cuvette (24a) de réception d'huile de lubrification destinée à recevoir de l'huile.

3. Déflecteur d'huile de lubrification selon la revendication 2, **caractérisé en ce que**, ledit au moins un canal interne de guidage (28) s'étendant suivant une direction longitudinale d'extension, la cuvette de réception d'huile de lubrification (24a) est positionnée à la première extrémité (24) du corps de manière décalée suivant une direction transversale relativement à la direction longitudinale d'extension.

4. Déflecteur d'huile de lubrification selon la revendication 2 ou 3, **caractérisé en ce que**, ledit au moins un canal interne de guidage (28) s'étendant suivant une direction longitudinale d'extension, la première extrémité (24) du corps est pourvue, de manière décalée suivant une direction transversale relativement à la direction longitudinale d'extension, d'orifices (02) de sortie d'huile de lubrification.

5. Déflecteur d'huile de lubrification selon l'une des revendications précédentes, **caractérisé en ce que** le corps (22) a une forme générale allongée qui s'étend de la première extrémité (24) à la deuxième extrémité (26)

6. Déflecteur d'huile de lubrification selon la revendication précédente, **caractérisé en ce que** la forme générale allongée du corps est cintrée dans une partie (22a) qui est disposée entre la première extrémité (24) et la deuxième extrémité (26) et à distance de celles-ci.

7. Réducteur de vitesse (10 ;10') de turbomachine, **caractérisé en ce qu'**il comprend au moins un déflecteur d'huile de lubrification (20 ; 20', 20", 20‴) selon l'une des revendications 1 à 6.

8. Réducteur de vitesse (10 ;10') de turbomachine selon la revendication précédente, **caractérisé en ce qu'**il comprend un pignon solaire (12) et des pignons satellites (14) qui sont disposés autour du pignon solaire et qui sont en prise, d'une part, avec le pignon solaire et, d'autre part, avec une couronne qui s'étend autour des pignons satellites.

9. Réducteur de vitesse (10) de turbomachine selon la revendication précédente, **caractérisé en ce que** les pignons satellites (14) sont agencés suivant une disposition verticale autour du pignon solaire (12), un ou plusieurs déflecteurs d'huile de lubrification (20 ; 20', 20", 20"') selon l'une des revendications 1 à 6 s'étendant chacun entre le pignon solaire (12 ;12') et deux pignons satellites adjacents (14 ;14') de telle manière que la première extrémité (24) du ou des déflecteurs soit orientée en vis-à-vis du pignon solaire (12 ;12') et soit située à une position verticale supérieure à celle de la deuxième extrémité opposée (26) du déflecteur concerné qui est située à distance du pignon solaire, entre les deux pignons satellites circonférentiellement adjacents correspondants (14 ;14').

10. Réducteur de vitesse (10) de turbomachine selon la revendication précédente, **caractérisé en ce qu'**il comporte un déflecteur d'huile de lubrification (20) qui s'étend verticalement entre le pignon solaire (12) et deux pignons satellites circonférentiellement adjacents (14, 14a, 14b).

11. Réducteur de vitesse (10') de turbomachine selon l'une des revendications 8 à 10, **caractérisé en ce qu'**il comporte au moins un déflecteur d'huile de lubrification (20", 20‴) qui s'étend de manière oblique entre le pignon solaire (12') et deux pignons satellites adjacents (14').

12. Turbomachine, **caractérisée en ce qu'**elle comprend un réducteur de vitesse (10 ;10') de turbomachine selon l'une des revendications 7 à 11.

## Patentansprüche

1. Schmieröldeflektor (20; 20', 20", 20"') für ein Untersetzungsgetriebe einer Turbomaschine, wobei der Deflektor einen Körper (22) mit einem ersten Ende (24), das dazu gedacht ist, gegenüber einem Sonnenrad des Untersetzungsgetriebes angeordnet zu sein, und einem gegenüberliegenden zweiten Ende (26) umfasst, wobei der Körper (22) zwei Seitenflächen beinhaltet, die jeweils dazu gedacht sind, gegenüber einem Planetenrad des Getriebes angeordnet zu sein und die jeweils das erste und das zweite Ende (24, 26) miteinander verbinden, wobei der Körper (22) mindestens einen inneren Ölführungskanal (28) beinhaltet, **dadurch gekennzeichnet, dass** das erste Ende (24) des Körpers (22) dazu ausgestaltet ist, das Öl des Sonnenrads aufzunehmen und das gegenüberliegende zweite Ende (26) dazu ausgestaltet ist, das Öl aus dem Körper (22) abzuleiten, wobei der innere Ölführungskanal (28) in dem ersten Ende (24) und in dem zweiten Ende (26) mündet und dazu ausgestaltet ist, das Öl durch Schwerkraft durch das zweite Ende (26) abzuleiten.

2. Schmieröldeflektor nach Anspruch 1, **dadurch gekennzeichnet, dass** das erste Ende (24) eine Schmierölaufnahmeschale (24a) beinhaltet, die dazu gedacht ist, Öl aufzunehmen.

3. Schmieröldeflektor nach Anspruch 2, **dadurch gekennzeichnet, dass** sich der mindestens eine innere Führungskanal (28) entlang einer Längserstreckungsrichtung erstreckt, wobei die Schmierölaufnahmeschale (24a) an dem ersten Ende (24) des Körpers auf versetzte Weise entlang einer Querrichtung relativ zu der Längserstreckungsrichtung positioniert ist.

4. Schmieröldeflektor nach Anspruch 2 oder 3, **dadurch gekennzeichnet, dass** sich der mindestens eine innere Führungskanal (28) entlang einer Längserstreckungsrichtung erstreckt, wobei das erste Ende (24) des Körpers auf versetzte Weise entlang einer Querrichtung relativ zu der Längserstreckungsrichtung, von Schmierölauslassöffnungen (02), vorgesehen ist.

5. Schmieröldeflektor nach einem der vorhergehenden Ansprüche, **dadurch gekennzeichnet, dass** der Körper (22) eine im Allgemeinen längliche Form aufweist, die sich von dem ersten Ende (24) zu dem zweiten Ende (26) erstreckt.

6. Schmieröldeflektor nach dem vorhergehenden Anspruch, **dadurch gekennzeichnet, dass** die im Allgemeinen längliche Form des Körpers in einem Teil (22a) gekrümmt ist, der zwischen dem ersten Ende (24) und dem zweiten Ende (26) und in einem Abstand davon angeordnet ist.

7. Untersetzungsgetriebe (10; 10') einer Turbomaschine, **dadurch gekennzeichnet, dass** es mindestens einen Schmieröldeflektor (20; 20', 20", 20‴) nach einem der Ansprüche 1 bis 6 umfasst.

8. Untersetzungsgetriebe (10; 10') einer Turbomaschine nach dem vorhergehenden Anspruch, **dadurch gekennzeichnet, dass** es ein Sonnenrad (12) und Planetenräder (14), die um das Sonnenrad angeordnet sind und die einerseits mit dem Sonnenrad und andererseits mit einem Hohlrad, das sich um die Planetenräder erstreckt, im Eingriff sind, umfasst.

9. Untersetzungsgetriebe (10) einer Turbomaschine nach dem vorhergehenden Anspruch, **dadurch gekennzeichnet, dass** die Planetenräder (14) entlang einer vertikalen Anordnung um das Sonnenrad (12) bereitgestellt sind, sich ein oder mehrere Schmieröldeflektoren (20; 20', 20", 20‴) nach einem der Ansprüche 1 bis 6 jeweils zwischen dem Sonnenrad (12; 12') und zwei benachbarten Planetenrädern (14; 14') auf eine solche Weise erstrecken, dass das erste Ende (24) des Deflektors oder der Deflektoren gegenüber dem Sonnenrad (12; 12') ausgerichtet ist und sich in einer vertikalen Position befindet, die höher als diejenige des zweiten gegenüberliegenden Endes (26) des betreffenden Deflektors ist, das sich in einem Abstand von dem Sonnenrad zwischen den zwei entsprechenden umlaufend benachbarten Planetenrädern (14; 14') befindet.

10. Untersetzungsgetriebe (10) einer Turbomaschine nach dem vorhergehenden Anspruch, **dadurch gekennzeichnet, dass** es einen Schmieröldeflektor (20) beinhaltet, der sich vertikal zwischen dem Sonnenrad (12) und zwei umlaufend benachbarten Planetenrädern (14, 14a, 14b) erstreckt.

11. Untersetzungsgetriebe (10') einer Turbomaschine nach einem der Ansprüche 8 bis 10, **dadurch gekennzeichnet, dass** es mindestens einen Schmieröldeflektor (20", 20‴) beinhaltet, der sich auf schräge Weise zwischen dem Sonnenrad (12') und zwei benachbarten Planetenrädern (14') erstreckt.

12. Turbomaschine, **dadurch gekennzeichnet, dass** sie ein Untersetzungsgetriebe (10; 10') einer Turbomaschine nach einem der Ansprüche 7 bis 11 umfasst.

## Claims

1. A lubricating oil deflector (20; 20', 20", 20‴) for a speed reduction gear of a turbomachine, the deflector comprising a body (22) having a first end (24) intended to be disposed facing a sun gear of the reduction gear and a second opposite end (26), the body (22) including two side faces each intended to be disposed facing a planet gear of the reduction gear and each connecting the first and second ends (24, 26) together, the body (22) including at least one inner oil guide channel (28), **characterized in that** the first end of the body (22) is configured to receive oil from the sun gear and the opposite second end (26) is configured to discharge the oil from the body (22), the inner oil guide channel (28) opening out at the first end (24) and at the second end (26) and being configured to discharge the oil by gravity through the second end (26).

2. The lubricating oil deflector according to claim 1, **characterized in that** the first end (24) includes a lubricating oil receiving cup (24a) intended to receive oil.

3. The lubricating oil deflector according to claim 2, **characterized in that**, said at least one inner guide channel (28) extending along a longitudinal direction of extension, the lubricating oil receiving cup (24a) is positioned at the first end (24) of the body in an offset manner along a transverse direction relative to the longitudinal direction of extension.

4. The lubricating oil deflector according to claim 2 or 3, **characterized in that**, said at least one inner guide channel (28) extending along a longitudinal direction of extension, the first end (24) of the body is provided, in an offset manner along a transverse direction relative to the longitudinal direction of extension, with lubricating oil outlet orifices (02).

5. The lubricating oil deflector according to any of the preceding claims, **characterized in that** the body (22) has a generally elongated shape extending from the first end (24) to the second end (26).

6. The lubricating oil deflector according to the preceding claim, **characterized in that** the generally elongated shape of the body is curved in a portion (22a) which is disposed between the first end (24) and the second end (26) and spaced therefrom.

7. A speed reduction gear (10; 10') of a turbomachine, **characterized in that** it comprises at least one lubricating oil deflector (20; 20', 20", 20‴) according to any of claims 1 to 6.

8. The speed reduction gear (10; 10') of a turbomachine according to the preceding claim, **characterized in that** it comprises a sun gear (12) and planet gears (14) which are disposed around the sun gear and which are engaged, on the one hand, with the sun gear and, on the other hand, with a ring gear which extends around the planet gears.

9. The speed reduction gear (10) of a turbomachine according to the preceding claim, **characterized in that** the planet gears (14) are arranged in a vertical disposition around the sun gear (12), one or several lubricating oil deflectors (20; 20', 20", 20‴) according to any of claims 1 to 6 each extending between the sun gear (12; 12') and two adjacent planet gears (14; 14') such that the first end (24) of the deflector(s) is oriented facing the sun gear (12; 12') and is located at a higher vertical position than that of the opposite second end (26) of the concerned deflector which is located at a distance from the sun gear, between the two corresponding circumferentially adjacent planet gears (14; 14').

10. The speed reduction gear (10) of a turbomachine according to the preceding claim, **characterized in that** it includes a lubricating oil deflector (20) which extends vertically between the sun gear (12) and two circumferentially adjacent planet gears (14, 14a, 14b).

11. The speed reduction gear (10') of a turbomachine according to any of claims 8 to 10, **characterized in that** it includes at least one lubricating oil deflector (20", 20‴) which extends obliquely between the sun gear (12') and two adjacent planet gears (14').

12. A turbomachine, **characterized in that** it comprises a speed reduction gear (10; 10') of a turbomachine according to any of claims 7 to 11. 1
